(19) Europäisches Patentamt

European Patent Office

Office européen des brevets

(11) **EP 4 721 995 A1**

(12) **EUROPEAN PATENT APPLICATION**

(43) Date of publication:
08.04.2026 Bulletin 2026/15

(21) Application number: 25201481.6

(22) Date of filing: **10.09.2025**

(51) International Patent Classification (IPC):
*B60C 1/00* (2006.01)      *C08L 7/00* (2006.01)
*C08L 9/00* (2006.01)      *C08L 9/06* (2006.01)

(52) Cooperative Patent Classification (CPC):
(C-Sets available)
**C08L 7/00; B60C 1/0016; C08L 9/00; C08L 9/06**
(Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **25.09.2024 JP 2024166363**

(71) Applicant: **Sumitomo Rubber Industries, Ltd.
Kobe-shi, Hyogo 651-0072 (JP)**

(72) Inventor: **YONEZU, Tomoki
Insingen, 651-0072 (JP)**

(74) Representative: **Manitz Finsterwald
Patent- und Rechtsanwaltspartnerschaft mbB
Martin-Greif-Straße 1
80336 München (DE)**

(54) **TIRE**

(57) Provided is a tire, wherein a standardized internal pressure of the tire is 350 kPa or more and 600 kPa or less, wherein the tire comprises a copolymer resin comprising cyclopentadiene as a monomer component, and wherein L is 90 or more, and L×P is greater than 1000, where L represents a land ratio, in %, of shoulder parts and P represents a total amount, in parts by mass, of plasticizing agents based on 100 parts by mass of the rubber component in the rubber composition.

EP 4 721 995 A1

(52) Cooperative Patent Classification (CPC): (Cont.)

C-Sets
**C08L 7/00, C08L 9/00, C08L 91/00, C08L 45/00,
C08K 3/04, C08K 3/06;
C08L 9/00, C08L 9/06, C08L 9/06, C08L 91/00,
C08L 45/00, C08K 3/04, C08K 3/36, C08K 3/06;
C08L 9/06, C08L 9/00, C08L 91/00, C08L 45/00,
C08K 3/04, C08K 3/06**

**Description**

TECHNICAL FIELD

The present invention relates to a tire.

BACKGROUND OF THE INVENTION

JP 2007-186567 A describes a rubber composition for tire tread in which dry and wet steering stabilities and the like are improved without impairing fuel efficiency of a silica-compounded rubber composition by compounding a resin component having a high glass transition temperature and a resin component having a low glass transition temperature into a silica-compounded rubber composition.

SUMMARY OF THE INVENTION

In recent years, greater importance has been placed on steering stability during cornering in vehicles such as a small truck and the like. The tire of JP 2007-186567 A does not fully consider steering stability during cornering.
It is an object of the present invention to provide a tire having improved overall performance of steering stability during cornering and fuel efficiency.
The present invention relates to:

a tire comprising a tread part,
wherein a standardized internal pressure of the tire is 350 kPa or more and 600 kPa or less,
wherein the tread part is composed of a rubber composition comprising a rubber component, a filler, and a plasticizing agent,
wherein the plasticizing agent comprises a copolymer resin comprising cyclopentadiene as a monomer component,
wherein L is 90 or more, and $L \times P$ is greater than 1000, where a pair of shoulder parts represent a region of 10% from a tread end of a ground-contacting surface of the tread part, L represents a land ratio, in %, of the pair of shoulder parts, and P represents a total amount, in parts by mass, of the plasticizing agents based on 100 parts by mass of the rubber component in the rubber composition.

According to the present invention, a tire having improved overall performance of steering stability during cornering and fuel efficiency can be provided.

BRIEF DESCRIPTION OF THE DRAWINGS

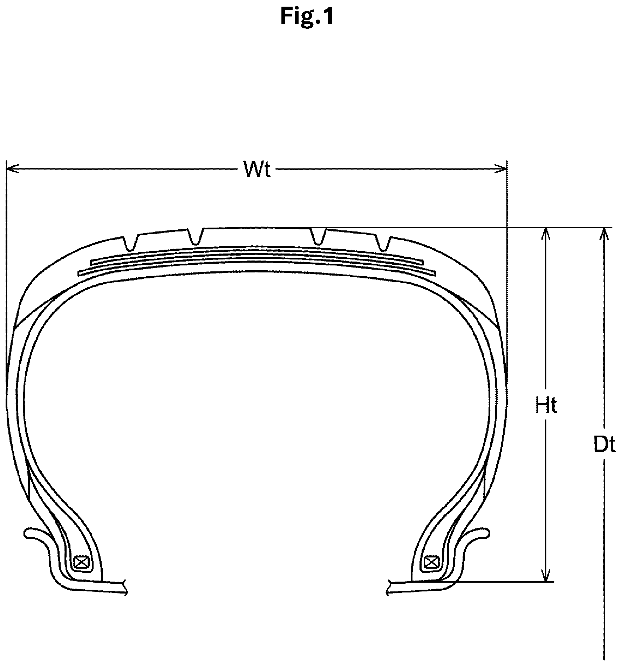

FIG. 1 is a cross-sectional view of a tire, showing a tire cross-sectional width Wt, a tire cross-sectional height Ht, and a tire outer diameter Dt.
FIG. 2 is a view schematically representing a tread pattern of a tire relating to one embodiment of the present invention.

DETAILED DESCRIPTION

The tire relating to one embodiment of the present invention is a tire comprising a tread part,

wherein a standardized internal pressure of the tire is 350 kPa or more and 600 kPa or less, wherein the tread part is composed of a rubber composition comprising a rubber component, a filler, and a plasticizing agent,
wherein the plasticizing agent comprises a copolymer resin comprising cyclopentadiene as a monomer component, and
wherein L is 90 or more, and $L \times P$ is greater than 1000, where a pair of shoulder parts represent a region of 10% from a tread end of a ground-contacting surface of the tread part, L represents a land ratio, in %, of the pair of shoulder parts, and P represents a total amount, in parts by mass, of the plasticizing agents based on 100 parts by mass of the rubber component in the rubber composition.

Although it is not intended to be bound by a theory, the following can be considered as a reason why the overall performance of steering stability during cornering and fuel efficiency is improved in the tire of the present embodiment.
That is, (1) the rubber composition constituting the tread part comprises a copolymer resin comprising a bulky cyclopentadiene as a monomer component, as a plasticizing agent, thereby giving the rubber composition flexibility without impairing a reinforcing effect, which is therefore considered to contribute to achieving both fuel efficiency and steering stability. Moreover, (2) the copolymer resin has a high compatibility with the rubber component at its cyclopentadiene part, so that it is less likely to elute from the rubber composition, and an elastic modulus of the rubber composition at high temperatures is reduced, which is therefore considered to contribute to steering stability during cornering. (3) When the land ratio L of the shoulder parts is 90% or more, rigidity of the tread part is increased, which is considered to contribute to steering stability during cornering. Then, (4) when $L \times P$ is greater than 1000, heat generated in the tire during vehicle running weakens a $\pi$-$\pi$ interaction between aromatic rings in the copolymer resin, and mobility of the copolymer resin in the rubber composition is increased, therefore realizing a high rigidity of the tread part while improving a grounding property onto a road surface in the vicinity of the ground-contacting surface of the tire, which is considered to contribute to steering stability during cornering. Then, with cooperation of the above-described (1) to (4), it is considered that a remarkable effect of improving the overall performance of steering stability during cornering and fuel efficiency is achieved.

The rubber component preferably comprises a styrene-butadiene rubber.

The styrene-butadiene rubber has a high compatibility with the copolymer resin comprising cyclopentadiene as the monomer component and can further reduce the elastic modulus at high temperatures, which is considered to further improve steering stability during cornering.

The styrene-butadiene rubber has a styrene content of preferably 25% by mass or less, more preferably 15% by mass or less, further preferably 10% by mass or less.

When the styrene content of the styrene-butadiene rubber is within the above-described ranges, the styrene-butadiene rubber improves in compatibility with the copolymer resin comprising cyclopentadiene as the monomer component and can further reduce the elastic modulus at high temperatures, which is considered to further improve steering stability during cornering.

The filler preferably comprises silica. Among fillers, silica has an effect of maintaining an elastic modulus low at high temperatures, which is therefore considered to further improve steering stability during cornering.

T/Y is preferably less than 0.25, more preferably less than 0.15, where T represents a thickness, in mm, of the tread part and Y represents a content, in parts by mass, of silica based on 100 parts by mass of the rubber component in the rubber composition.

When T/Y is within the above-described ranges, rigidity of the tread part is increased, which is therefore considered to further improve steering stability during cornering.

$L \times Y$ is preferably greater than 6000, where Y represents a content, in parts by mass, of silica based on 100 parts by mass of the rubber component in the rubber composition.

When $L \times Y$ is within the above-described ranges, rigidity of the tread part and the elastic modulus at high temperatures are appropriately adjusted, which is considered to further improve steering stability during cornering.

T/L is preferably less than 0.20, where T represents a thickness, in mm, of the tread part.

When T/L is within the above-described range, rigidity of the tread part is increased, which is considered to further improve steering stability during cornering.

$L \times P$ is preferably greater than 1400. It is considered that steering stability during cornering is further improved.

[Definitions]

A "standardized state" is a state where a tire is rim-assembled on a standardized rim and air under a standardized internal pressure is filled, and no load is applied. Unless otherwise specified, a tire in the standardized state is used.

A "dimension of each part of a tire" is, for one appearing on the outer surface of the tire, a value specified in a standardized condition unless otherwise specified, while it is, for one present inside the tire or on a tire cutting surface, a value specified in a condition where, for example, the tire is cut on a plane including a tire rotation axis and the cut tire piece is held to a rim width of a standardized rim.

A "standardized rim" is a rim in a standard system including a standard on which the tire is based, defined by the standard for each tire. For example, the "standardized rim" refers to a standard rim of an applicable size described in "JATMA YEAR BOOK" in JATMA (The Japan Automobile Tyre Manufacturers Association, Inc.), "Measuring Rim" described in "STANDARDS MANUAL" in ETRTO (The European Tyre and Rim Technical Organisation), or "Design Rim" described in "YEAR BOOK" in TRA (The Tire and Rim Association, Inc.), to which references are made in this order, and if there is an applicable size at the time of the reference, the rim conforms to its standard. Besides, in a case of tires that are not defined by the standard, the standardized rim shall refer to one which can be assembled to the tire and whose width is narrowest among rims having the smallest diameter that can maintain an internal pressure (i.e., do not cause air leakage between the rim and the tire).

A "standardized internal pressure" is an air pressure in a standard system including a standard on which the tire is based, defined by the standard for each tire, for example, it refers to a "MAXIMUM AIR PRESSURE" in JATMA, "INFLATION PRESSURE" in ETRTO, or a maximum value described in Table "TIRE LOAD LIMITS AT VARIOUS COLD INFLATION PRESSURES" in TRA, to which references are made in this order as in the case of the standardized rim, and if there is an applicable size at the time of the reference, the standardized internal pressure conforms to its standard. Besides, in a case of tires that are not defined by the standard, the standardized internal pressure shall refer to a standardized internal pressure (250 KPa or more) of another tire size (specified in the standard) for which the standardized rim is described as a standard rim, and when a plurality of standardized internal pressures of 250 KPa or more are described, it shall refer to the minimum value among them.

A "standardized load in kg" is a load in a standard system including a standard on which the tire is based, defined by the standard for each tire, for example, a "MAXIMUM LOAD CAPACITY" in JATMA, a "LOAD CAPACITY" in ETRTO, or a maximum value described in Table "TIRE LOAD LIMITS AT VARIOUS COLD INFLATION PRESSURES" in TRA, to which references are made in this order as in cases of a standardized rim and a standardized internal pressure, and if there is an applicable size at the time of the reference, the load conforms to its standard. Then, in a case of tires that are not defined by the standard, the maximum load capacity WL calculated separately is defined as a standardized load.

The "maximum load capacity WL, in kg" is calculated by the following equations. "V" is a virtual volume, in mm$^3$, of a tire, "Dt" is a tire outer diameter, in mm, in a standardized state, "Ht" is a tire cross-sectional height, in mm, in a tire radial direction on a cross section of the tire in a plane including a tire rotation axis, and "Wt" is a tire cross-sectional width, in mm, in a standardized state. When R represents a rim diameter of the tire, Ht can be calculated by (Dt-R)/2. Wt is a value obtained by excluding, if any, patterns or characters on the side surface of the tire. Besides, the "maximum load capacity" has the same meaning as the above-described standardized load.

$$W_L = 0.000011 \times V + 175$$

$$V = \{(Dt / 2)^2 - (Dt / 2 - Ht)^2\} \times \pi \times Wt$$

A "tread part" is a member comprising a part that forms a ground-contacting surface of a tire, and in a case where the tire comprises a member that forms a tire skeleton from steel or a textile material such as a belt layer, a belt reinforcing layer, a carcass layer, and the like, on a cross section in a tire radial direction, a member arranged on an outer side therefrom in the tire radial direction.

A "ground-contacting surface of a tread part" is a region of a tread as obtained from a contour when a tire is pressed against the ground. The ground-contacting surface of the tread part can be obtained by mounting the tire on a standardized rim, filling a standardized internal pressure, and leaving the tire to stand at 25°C for 24 hours, followed by painting a tread surface of the tire with ink, applying a standardized load (load equal to the maximum load capacity) on the tire to press the tire vertically against a cardboard (a camber angle at 0°), and transferring the ink.

An "effective ground-contacting region" is a region of a tread where a tire touches the ground when the tire is pressed against the ground. The effective ground-contacting region is a region painted with ink as obtained by mounting the tire on a standardized rim, filling a standardized internal pressure, and leaving the tire to stand at 25°C for 24 hours, followed by painting a tread surface of the tire with ink, applying a standardized load (load equal to the maximum load capacity) on the tire to press the tire vertically against a cardboard (a camber angle at 0°), and transferring the ink.

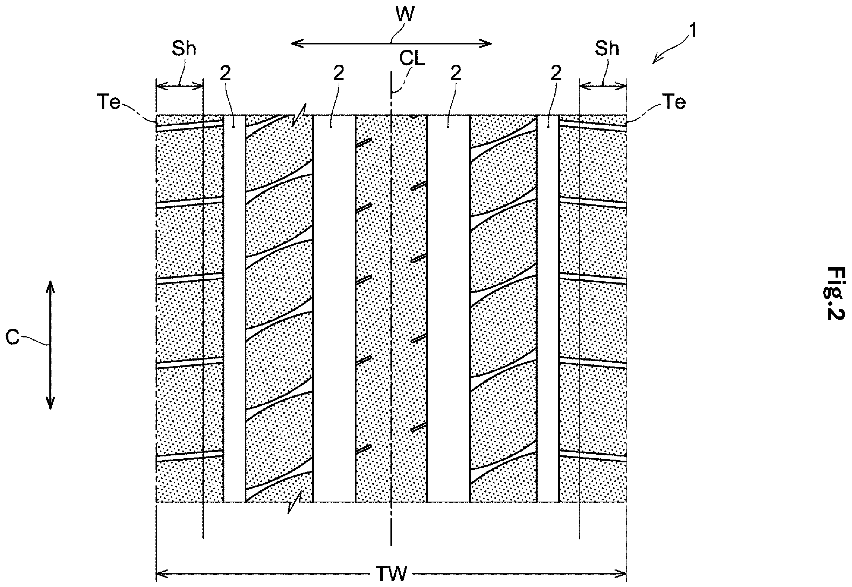

A "tread ground-contacting width" is the maximum width of a ground-contacting surface of a tread part in a tire width direction. The tread ground-contacting width is calculated, as the maximum width in the tire width direction, from a ground-contacting surface of a tread part as obtained by mounting the tire on a standardized rim, filling a standardized internal pressure, and leaving the tire to stand at 25°C for 24 hours, followed by painting a tread surface of the tire with ink, applying a standardized load (load equal to the maximum load capacity) on the tire to press the tire vertically against a cardboard (a camber angle at 0°), and transferring the ink. The same transferring operation as described above is carried out at five locations in total by rotating the tire by 72° to obtain five values of the maximum width, which are then averaged to obtain an averaged value thereof. In FIG. 2, the tread ground-contacting width is indicated as TW.

A "shoulder part" refers to a region, on a ground-contacting surface of a tread part, of 10% width of a tread ground-contacting width from a tread end of the ground-contacting surface of the tread part, and one pair of shoulder parts exist for one tire.

A "land ratio L of a pair of shoulder parts" is calculated by the following equation from a total ground-contacting area for a ground-contacting surface of the tread part and an effective ground-contacting area for the effective ground-contacting region, of the pair of shoulder parts.

Land ratio L of pair of shoulder parts = (total effective ground-contact area of pair of shoulder parts/total ground-contacting area of pair of shoulder parts)

A "thickness T, in mm, of a tread part" is a thickness of a tread part as measured along a normal line of a tread surface on a tire equator, on a cross section of a tire cut on a plane including a tire rotation axis. When the tread part is formed of a plurality of rubber layers, a total value of thicknesses of the respective rubber layers is the "thickness T, in mm, of the tread part". Moreover, when the tire has a groove on the tire equator, the thickness T is measured along the normal line of the tread surface on the tire equator, with the groove being assumed to be filled.

A "plasticizing agent" is a material that imparts plasticity to a rubber component, which is a component extracted from a rubber composition using acetone. Moreover, the plasticizing agent includes a plasticizing agent that is liquid (in a liquid state) at 25°C and a plasticizing agent that is solid at 25°C. However, it shall not comprise wax and stearic acid commonly used in the tire industry.

A "total amount P of plasticizing agents" refers to a total amount of all plasticizing agents contained in a rubber composition, such as a resin component, oil, a liquid rubber, an ester-based plasticizing agent, and the like, and includes an amount of a plasticizing agent in a rubber component extended by the plasticizing agent.

An "acetone extraction amount (AE)" is a value calculated by the following equation by immersing each vulcanized rubber test piece in acetone for 72 hours to extract a soluble component and measuring a mass of each test piece before and after extraction, in accordance with JIS K 6229.

Acetone extraction amount (% by mass) = {(mass of rubber test piece before extraction - mass of rubber test piece after extraction) / (mass of rubber test piece before extraction)} $\times$ 100

A "rubber component of a rubber composition" is a component that contributes to crosslinking in the rubber composition and generally has a weight-average molecular weight (Mw) of 10,000 or more.

A "glass transition temperature of a rubber component" is a static glass transition temperature of each rubber component calculated by a differential scanning calorimeter (for example, Q200 manufactured by TA Instruments Japan Inc.).

A "styrene content" is calculated by pyrolysis gas chromatography or NMR measurement ($^1$H-NMR or $^{13}$C-NMR). Unlike physical property values such as a complex elastic modulus (E*) and the like, an amount of a component such as the "styrene content" and the like has a true value that is independent of a measuring method, so it is preferable to use a measuring method with as high accuracy as possible. Besides, in the present specification, "pyrolysis gas chromatography" refers to a method of heating a sample in a pyrolyzer, separating individual components contained in gas phase generated by this heating using a separation column, and analyzing each separated component.

A "vinyl content (1,2-bond butadiene unit amount)" is calculated by pyrolysis gas chromatography or NMR measurement ($^1$H-NMR or $^{13}$C-NMR). Similarly with the "styrene content", the "vinyl content" has a true value that is independent of a measuring method, so it is preferable to use a measuring method with as high accuracy as possible.

A "cis content (cis-1,4-bond butadiene unit amount)" is a value measured by infrared absorption spectrometry or NMR measurement ($^1$H-NMR or $^{13}$C-NMR) according to JIS K 6239-2:2017 and is applied to, for example, a rubber component having a repeating unit derived from butadiene such as a BR and the like. Similarly with the "styrene content", the "cis content" has a true value that is independent of a measuring method, so it is preferable to use a measuring method with as high accuracy as possible.

A "weight-average molecular weight (Mw)" can be calculated in terms of a standard polystyrene based on measurement values obtained by a gel permeation chromatography (GPC) (e.g., GPC-8000 Series manufactured by Tosoh Corporation, detector: differential refractometer, column: TSKgel (Registered trademark) SuperMultiporeHZ-M manufactured by Tosoh Corporation). For example, it is applied to an SBR, a BR, a plasticizing agent, and the like.

A "softening point of a resin component" is a temperature at which a sphere drops when the softening point specified in JIS K 6220-1:2015 7.7 is measured with a ring and ball softening point measuring device.

A "total styrene amount in a rubber composition" is a total styrene amount, in % by mass, in the rubber composition with a mass of a rubber component being as 100% by mass, which is a total amount of contents of styrene contained in rubber components and contents of styrene parts contained in compounding agents other than the rubber components. The styrene part is not particularly limited as long as it is a group having a styrene structure, examples of which include, for example, styrene, $\alpha$-methylstyrene, vinyltoluene, chlorostyrene, and the like.

A "nitrogen adsorption specific surface area (N$_2$SA) of carbon black" is measured according to JIS K 6217-2:2017.

A "nitrogen adsorption specific surface area (N$_2$SA) of silica" is measured by the BET method according to ASTM D3037-93.

An "average primary particle size" is a value obtained by photographing particles using a transmission or scanning electron microscope and calculating an arithmetic average of particle sizes of 400 particles. If a shape of the particle is spherical, a diameter of the sphere is defined as a particle size, and if the shape is other than spherical, a circle equivalent diameter (positive square root of {4 $\times$ (area of particle)/$\pi$}) is calculated from the microscope image to be defined as a particle size.

The embodiment will be described in further detail below. However, the following descriptions are illustrative for explaining the present invention, and the present invention is not limited thereto. The embodiment will be described with reference to the drawings as appropriate, but the drawings are merely illustrative.

[Tire]

The tire relating to one embodiment of the present invention will be described below with reference to the drawings. Besides, embodiments shown below are merely examples, and the tire of the present invention is not limited to the following embodiments.

The tire relating to one embodiment of the present invention will be described below with reference to the drawings. The tire relating to the present embodiment is a tire comprising a tread part, wherein a standardized internal pressure of the tire is 350 kPa or more and 600 kPa or less, wherein the tread part is composed of a rubber composition comprising a rubber component, a filler, and a plasticizing agent, wherein the plasticizing agent comprises a copolymer resin comprising cyclopentadiene as a monomer component, and wherein L is 90 or more, and L×P is greater than 1000, where a pair of shoulder parts represent a region of 10% from a tread end of a ground-contacting surface of the tread part, L represents a land ratio, in %, of the pair of shoulder parts, and P represents a total amount, in parts by mass, of the plasticizing agents based on 100 parts by mass of the rubber component in the rubber composition. Besides, embodiments shown below are merely examples, and the tire relating to the present embodiment is not limited to the following embodiments.

A standardized internal pressure of the tire relating to the present embodiment is 350 kPa or more and 600 kPa or less. The standardized internal pressure of the tire relating to the present embodiment is selected by selecting a tire size suitable for application, depending on application for a tire, such as for a small truck, a passenger car, a large passenger car, a large SUV, and the like.

FIG. 2 is a view schematically representing a tread pattern of a tire relating to one embodiment of the present invention. In FIG. 2, W is a tire width direction, C is a tire circumferential direction, and TW shows a tire ground-contacting width.

The tread part relating to the present embodiment preferably has one or more circumferential grooves extending continuously in a tire circumferential direction. In FIG. 2, there are four circumferential grooves 2, but the present invention is not limited to such an aspect, and the number of circumferential grooves 2 may be one, two, three, four, five or more. When there are two or more circumferential grooves, groove widths of and groove depths at the deepest part of the two or more circumferential grooves may be the same for all of the circumferential grooves or may be different. Moreover, the circumferential groove 2 may extend linearly along a circumferential direction or may extend in a wavy, sinusoidal, or zigzag shape along the circumferential direction.

In the tread part relating to the present embodiment, a region of 10% from a tread end of a ground-contacting surface of the tread part is defined as a pair of shoulder parts Sh. A land ratio L of the pair of shoulder parts is 90% or more, preferably 92% or more, more preferably 95% or more, further preferably 97% or more, particularly preferably 98% or more. Moreover, L may be 100%.

A product L×P of a total amount P, in parts by mass, of the plasticizing agents based on 100 parts by mass of the rubber component in the rubber composition constituting the tread part relating to the present embodiment and L, in %, is greater than 1000, preferably greater than 1200, more preferably greater than 1300, further preferably greater than 1400, particularly preferably greater than 1450.

A thickness T of the tread part relating to the present embodiment is preferably 12.0 mm or more, more preferably 15.0 mm or more, further preferably 17.0 mm or more. Moreover, the thickness T of the tread part is preferably 25.0 mm or less, more preferably 22.0 mm or less, further preferably 20.0 mm or less.

A ratio of T to Y, that is, T/Y is preferably less than 0.30, more preferably less than 0.29, further preferably less than 0.25, where T represents a thickness, in mm, of the tread part relating to the present embodiment and Y represents a content of silica based on 100 parts by mass of the rubber component in the rubber composition constituting the tread part. Moreover, T/Y is preferably greater than 0.10, more preferably greater than 0.12. Besides, the rubber composition relating to the present embodiment does not necessarily comprise silica as a filler, and Y may be 0, in which case, a value of T/Y is not calculated.

A ratio of T to L, that is, T/L is preferably less than 0.22, more preferably less than 0.20, further preferably less than 0.19, where T represents a thickness, in mm, of the tread part relating to the present embodiment. Moreover, T/L is preferably greater than 0.11, more preferably greater than 0.12, further preferably greater than 0.13.

[Rubber composition]

The rubber composition constituting the tread part relating to the present embodiment (hereinafter referred to as the rubber composition relating to the present embodiment) will be described below. The rubber composition of the present embodiment comprises a rubber component, a filler, and a plasticizing agent, and comprises, as the plasticizing agent, a copolymer resin comprising cyclopentadiene as a monomer component.

<Rubber component>

The rubber composition relating to the present embodiment preferably comprises a diene-based rubber as a rubber component.

As the diene-based rubber, any of those usually used in the tire industry can be appropriately used. Specific examples of the diene-based rubber include, for example, a styrene-butadiene rubber (SBR), an isoprene (IR)-based rubber, a butadiene rubber (BR), a styrene-isoprene rubber (SIR), a chloroprene rubber (CR), and the like. These diene-based rubbers may be used alone, or two or more thereof may be used in combination.

A content of the diene-based rubber in the rubber component is preferably greater than 50% by mass, more preferably greater than 80% by mass, further preferably greater than 90% by mass, particularly preferably greater than 95% by mass. The rubber component may be one consisting of a diene-based rubber.

The rubber composition relating to the present embodiment preferably comprises an SBR as a diene-based rubber, and more preferably comprises an SBR and a BR.

(SBR)

An SBR is not particularly limited, examples of which include a solution-polymerized SBR (S-SBR), an emulsion-polymerized SBR (E-SBR), modified SBRs (a modified S-SBR, a modified E-SBR) thereof, and the like. Examples of the modified SBR include an SBR modified at its terminal and/or main chain, a modified SBR coupled with tin, a silicon compound, etc. (a modified SBR of condensate or having a branched structure, etc.), and the like. Furthermore, hydrogenated ones of these SBRs (hydrogenated SBRs) and the like can also be used. The SBR may be used alone, or two or more thereof may be used in combination.

As an SBR, an oil-extended SBR can be used, or a non-oil-extended SBR can be used. In the present specification, as SBRs, those commercially available from JSR Corporation, Sumitomo Chemical Co., Ltd., UBE Corporation, Asahi Kasei Corporation, ZS Elastomer Co., Ltd., ARLANXEO, etc. can be used.

A styrene content of an SBR is preferably less than 50% by mass, more preferably 30% by mass or less, further preferably 25% by mass or less, further preferably 15% by mass or less, particularly preferably 10% by mass or less, from the viewpoint of steering stability during cornering. On the other hand, the styrene content of the SBR is preferably 3% by mass or more, more preferably 5% by mass or more, further preferably 8% by mass or more., from the viewpoint of compatibility with a copolymer resin comprising cyclopentadiene as a monomer component. The styrene content of the SBR is measured by the above-described measuring method.

A vinyl content of an SBR is preferably greater than 10 mol%, more preferably greater than 15 mol%, further preferably greater than 20 mol%. Moreover, the vinyl content of the SBR is preferably less than 70 mol%, more preferably less than 60 mol%, further preferably less than 50 mol%. Besides, the vinyl content of the SBR is measured by the above-described measuring method.

A glass transition point (Tg) of an SBR is preferably -80°C or higher, more preferably -70°C or higher, further preferably -65°C or higher, from the viewpoint of wet grip performance. Moreover, the Tg of the SBR is preferably -30°C or lower, more preferably -35°C or lower, further preferably -45°C or lower, from the viewpoint of fuel efficiency. Besides, the Tg of the SBR is measured by the above-described measuring method.

A weight-average molecular weight (Mw) of an SBR is preferably greater than 100,000, more preferably greater than 150,000, further preferably greater than 180,000, particularly preferably greater than 200,000. Moreover, the Mw is preferably less than 1,500,000, more preferably less than 1,100,000, further preferably less than 1,000,000, from the viewpoints of cross-linking uniformity, etc. Besides, the Mw of the SBR is measured by the above-described measuring method.

A content of an SBR in the rubber component is preferably greater than 10% by mass, more preferably greater than 20% by mass, further preferably 30% by mass or more, particularly preferably greater than 40% by mass, from the viewpoint of compatibility with a copolymer resin comprising cyclopentadiene as a monomer component. Moreover, the content of the SBR in the rubber component is preferably less than 80% by mass, more preferably less than 70% by mass, further preferably 60% by mass or less, from the viewpoint of compounding other rubber components.

(BR)

A BR is not particularly limited, and those common in the tire industry can be used such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (an SPB-containing BR), a modified BR (a high cis modified BR, a low cis modified BR), and the like. The BR may be used alone, or two or more thereof may be used in combination.

As the high cis BR, for example, those commercially available from Zeon Corporation, UBE Corporation, JSR Corporation, etc. can be used. When the high cis BR is compounded, low temperature characteristics and abrasion resistance can be improved. A cis content of the high-cis BR is preferably greater than 95 mol%, more preferably greater than 96 mol%, further preferably greater than 97 mol%. Besides, the cis content of the BR is measured by the above-described measuring method.

The rare-earth-based BR includes those which are synthesized using a rare-earth element-based catalyst and have a vinyl content of preferably less than 1.8 mol%, more preferably less than 1.6 mol%, further preferably 1.5 mol% or less and a cis content of preferably greater than 95 mol%, more preferably greater than 96 mol%, further preferably 97 mol% or more. As the rare-earth-based BR, for example, those commercially available from LANXESS, etc. can be used.

Examples of the SPB-containing BR include those in which 1,2-syndiotactic polybutadiene crystal is chemically bonded with BR and dispersed, but not those in which the crystal is simply dispersed in the BR. As such an SPB-containing BR, those commercially available from UBE Corporation, etc. can be used.

Examples of the modified BR include a BR modified with a functional group or the like similar to those described above for the SBR, and the like, and a modified butadiene rubber (a modified BR) modified at its terminal and/or main chain with a functional group comprising at least one element selected from the group consisting of silicon, nitrogen, and oxygen can be appropriately used.

Examples of other modified BRs include those obtained by adding a tin compound after polymerizing 1,3-butadiene by a lithium initiator, the end of which is further bonded by tin-carbon bond (tin-modified BR), and the like. Moreover, the modified BR may be either non-hydrogenated or hydrogenated.

A weight-average molecular weight (Mw) of a BR is preferably greater than 300,000, more preferably greater than 350,000, further preferably greater than 400,000, from the viewpoint of abrasion resistance. Moreover, it is preferably less than 2,000,000, more preferably less than 1,000,000, further preferably less than 500,000, from the viewpoints of cross-linking uniformity, etc. Besides, the Mw can be calculated by the above-described method.

A content of a BR in the rubber component is preferably greater than 10% by mass, more preferably greater than 20% by mass, further preferably greater than 30% by mass. Moreover, the content of the BR in the rubber component is preferably 70% by mass or less, more preferably 60% by mass or less, further preferably 50% by mass or less.

(IR-based rubber)

As an isoprene (IR)-based rubber, for example, those common in the tire industry can be used, such as an isoprene rubber (IR), a natural rubber, and the like. Examples of the natural rubber include a non-modified natural rubber (NR), as well as a modified natural rubber such as an epoxidized natural rubber (ENR), a hydrogenated natural rubber (HNR), a deproteinized natural rubber (DPNR), an ultra pure natural rubber, a grafted natural rubber, and the like. The isoprene-based rubber may be used alone, or two or more thereof may be used in combination.

An NR is not particularly limited, and those common in the tire industry can be used, examples of which include, for example, SIR20, RSS#3, TSR20, and the like.

A content of an IR-based rubber in the rubber component is preferably less than 80% by mass, more preferably less than 70% by mass, further preferably less than 50% by mass. The rubber component may not comprise an IR-based rubber. A content of the IR-based rubber when compounded in the rubber component is preferably greater than 10% by mass, more preferably greater than 40% by mass, further preferably greater than 50% by mass.

(Other rubber components)

The rubber component may comprise rubber components other than diene-based rubbers (non-diene-based rubbers) as long as they do not affect the effects of the present invention. As the non-diene-based rubbers, rubber components commonly used in the tire industry can be used, examples of which include, for example, a butyl-based rubber, an ethylene-propylene rubber, a polynorbornene rubber, a silicone rubber, a polyethylene chloride rubber, a fluorine rubber (FKM), an acrylic rubber (ACM), a hydrin rubber, and the like. Other rubber components may be used alone, or two or more thereof may be used in combination. Moreover, besides the above-described rubber components, the rubber component may or may not comprise a known thermoplastic elastomer.

(Rubber component synthesized from recycle-derived/biomass-derived raw material)

A monomer that is a structural unit of a synthetic rubber such as an SBR, a BR, and the like may be one derived from underground resources such as petroleum, a natural gas, and the like, or a recycled one from a rubber product such as a tire and the like or a non-rubber product such as polystyrene and the like. A monomer obtained by recycling (a recycled monomer) is not particularly limited, examples of which include a recycle-derived polyisoprene, a recycle-derived butadiene, a recycle-derived aromatic vinyl compound, and the like. Examples of the butadiene include 1,2-butadiene, 1,3-butadiene, and the like. The above-described aromatic vinyl compound is not particularly limited, examples of which include styrene and the like. Among them, a recycle-derived polyisoprene (a recycled polyisoprene) a recycle-derived butadiene (a recycled butadiene) and/or a recycle-derived styrene (a recycled styrene) are preferably used as a raw material.

A method of producing a recycled monomer is not particularly limited, examples of which include, for example, a method of synthesizing a monomer from a recycle-derived naphtha obtained by decomposing a rubber product such as a tire and the like. Moreover, a method of producing a recycle-derived naphtha is not particularly limited, and a recycle-derived naphtha may be obtained from, for example, a rubber product such as a tire and the like by decomposing it under high temperature and pressure, by decomposing it by microwaves, or by mechanically pulverizing it and then extracting therefrom.

Furthermore, a monomer that is a structural unit of a polymer such as an IR, an SBR, a BR, and the like may be a biomass-derived one. In the present specification, biomass refers to a material derived from natural sources such as plants and the like. Biomass is not particularly limited, examples of which include, for example, agricultural, forestry and fishery products, sugar, wood waste, a plant residue after acquisition of a useful component, a plant-derived ethanol, a biomass naphtha, and the like.

The biomass-derived monomer (biomass monomer) is not particularly limited, examples of which include a biomass-derived butadiene, a biomass-derived aromatic vinyl compound, and the like. Examples of the butadiene include 1,2-butadiene, 1,3-butadiene, and the like. The above-described aromatic vinyl compound is not particularly limited, examples of which include styrene and the like. Moreover, a method of producing a biomass monomer is not particularly limited, examples of which include, for example, one by a biological and/or a chemical and/or a physical conversion of animals and plants, and the like. A microbial fermentation is representative of biological conversion, and examples of chemical and/or physical conversion include one due to a catalyst, one due to a high heat, one due to a high pressure, one due to an electromagnetic wave, one due to a critical fluid, and combinations thereof.

A polymer synthesized from a biomass monomer component (biomass polymer) is not particularly limited, examples of which include a butadiene rubber synthesized from a biomass-derived butadiene, an aromatic vinyl/butadiene copolymer synthesized from a biomass-derived butadiene and/or a biomass-derived aromatic vinyl compound, and the like. Examples of the aromatic vinyl/butadiene copolymer include, for example, a styrene-butadiene rubber synthesized from a biomass-derived butadiene and/or a biomass-derived styrene, and the like.

Whether a raw material of a polymer is derived from biomass can be determined by pMC (percent Modern Carbon) measured according to ASTM D6866-10. pMC is a ratio of $^{14}C$ concentration of a sample to $^{14}C$ concentration of a modern standard carbon (modern standard reference) and a value used as an index indicating a biomass ratio of a compound. A significance of this value is mentioned below.

In 1 mole of carbon atoms ($6.02 \times 10^{23}$ pieces), there are about $6.02 \times 10^{11}$ $^{14}C$ that are about one trillionth of the number of normal carbon atoms. A half-life of $^{14}C$ is 5730 years, and $^{14}C$ regularly decreases. Thus, in fossil fuels such as coal, petroleum, a natural gas, and the like, where it is considered that 226,000 years or more have passed since carbon dioxide in the atmosphere was absorbed by plants to be fixed, all of $^{14}C$ elements, which were contained in them at the beginning of fixation, decay. Therefore, in the present 21st century, fossil fuels such as coal, petroleum, a natural gas, and the like do not contain any $^{14}C$ element. Therefore, chemical substances produced using these fossil fuels as raw materials do not contain any $^{14}C$ element as well.

On the other hand, $^{14}C$ is constantly generated by cosmic rays causing nuclear reactions in the atmosphere. Thus, decrease in $^{14}C$ due to radioactive decay and generation of $^{14}C$ due to nuclear reactions are balanced, and the amount of $^{14}C$ has been constant in the Earth's atmospheric environment. Therefore, the $^{14}C$ concentration of substances derived from biomass resources that have been circulating in the current environment becomes a value of about $1 \times 10^{-12}$ mol% based on total C atoms, as described above. Accordingly, by utilizing a difference between these values, a biomass ratio in a certain compound can be calculated.

This $^{14}C$ is generally measured as follows. A $^{13}C$ concentration ($^{13}C/^{12}C$) and a $^{14}C$ concentration ($^{14}C/^{12}C$) are measured using an accelerator mass spectrometry based on a tandem accelerator. In the measurements, a $^{14}C$ concentration in a circulating carbon in nature as of 1950 is adopted as the modern standard reference for the $^{14}C$ concentration. As a specific reference material, an oxalic acid standard provided by NIST (National Institute of Standards and Technology) is used. A specific radioactivity of carbon in this oxalic acid (radioactivity intensity of $^{14}C$ per gram of carbon) is sorted for each carbon isotope, $^{13}C$ is corrected to a constant value, and a value corrected for attenuation from 1950 to the date of measurement is used as a standard $^{14}C$ concentration value (100%). A ratio of this value to a value actually measured for a sample becomes a pMC value.

Thus, if a rubber is produced from a material derived from 100% biomass, the $^{14}C$ concentration shows a value of approximately 110 pMC, often not being equal to 100 under a normal condition currently, though there are regional differences and the like. On the other hand, if this $^{14}C$ concentration is measured for a chemical substance derived from a fossil fuel such as petroleum and the like, it shows a value of approximately 0 pMC (for example, 0.3 pMC). This value corresponds to a biomass ratio of 0% as mentioned above.

From above, it is appropriate in terms of environmental protection to use a material such as a rubber having a high pMC value, and the like, that is, a material such as a rubber having a high biomass ratio, and the like, for a rubber composition.

<Filler>

The rubber composition relating to the present embodiment comprises a filler. The filler preferably comprises silica and/or carbon black, and more preferably comprises silica. The filler may be a filler consisting of silica and carbon black.

(Silica)

Silica is not particularly limited, and those common in the tire industry can be used, such as, for example, silica prepared by a dry process (anhydrous silica), silica prepared by a wet process (hydrous silica), and the like. A raw material of silica is not particularly limited, and may be, for example, mineral-derived raw materials such as quartz and the like, bio-derived raw materials such as rice husks and the like (e.g., silica made from a biomass material such as rice husks and the like), or silica recycled from a product containing silica. Among them, hydrous silica prepared by a wet process is preferable from the reason that it has many silanol groups. Silica may be used alone, or two or more thereof may be used in combination.

Silica made from a biomass material can be obtained by, for example, burning rice husks to obtain rice husk ashes, extracting silicate from the rice husk ashes using a sodium hydroxide solution, generating silicon dioxide by reacting the silicate with sulfuric acid in the same manner as for a conventional wet silica, and filtering, washing with water, drying and pulverizing precipitates of the silicon dioxide.

As silica recycled from a product containing silica, for example, silica recovered from an electronic component such as a semiconductor and the like, a tire, a product containing silica such as a desiccant, a filtering material such as diatomaceous earth and the like, etc. can be used. Moreover, a recovering method is not particularly limited, examples of which include pyrolysis, decomposition by electromagnetic waves, and the like. Among them, silica recovered from an electronic component such as a semiconductor and the like or from a tire is preferable.

When silica crystallizes, it is insoluble in water, and silicic acid that is a component thereof cannot be used. By controlling a burning temperature and a burning time, crystallization of silica in rice husk ashes can be suppressed (JP 2009-2594 A, Akita Prefectural University Web Journal B/2019, vol.6, p.216-222, etc.). As an amorphous silica extracted from rice husks, those commercially available from Wilmar, etc. can be used.

A nitrogen adsorption specific surface area ($N_2SA$) of silica is preferably greater than 120 $m^2/g$, more preferably greater than 150 $m^2/g$, further preferably greater than 160 $m^2/g$, particularly preferably greater than 170 $m^2/g$, from the viewpoint of reinforcing property. Moreover, it is preferably less than 250 $m^2/g$, more preferably less than 200 $m^2/g$, further preferably less than 180 $m^2/g$, from the viewpoints of heat generation and processability. Besides, the $N_2SA$ of silica is measured by the above-described measuring method.

An average primary particle size of silica is preferably 12 nm or more, more preferably 15 nm or more, further preferably 18 nm or more. Moreover, the average primary particle size is preferably less than 30 nm, more preferably less than 25 nm, further preferably less than 20 nm. Besides, the average primary particle size of silica is measured by the above-described measuring method.

A content Y of silica based on 100 parts by mass of the rubber component is preferably greater than 30 parts by mass, more preferably greater than 40 parts by mass, further preferably greater than 50 parts by mass, particularly preferably greater than 60 parts by mass. Moreover, the content Y of silica based on 100 parts by mass of the rubber component is preferably less than 120 parts by mass, more preferably less than 100 parts by mass, further preferably less than 80 parts by mass.

A product ($L \times Y$) of the content Y of silica based on 100 parts by mass of the rubber component and L is preferably greater than 6000, more preferably greater than 6100, further preferably greater than 6300.

A content of silica in a filler is preferably greater than 50% by mass, more preferably greater than 60% by mass, further preferably greater than 70% by mass, particularly preferably greater than 90% by mass.

(Silane coupling agent)

Silica is preferably used in combination with a silane coupling agent. Examples of the silane coupling agent include, but not particularly limited to, for example, sulfide-based silane coupling agents such as bis(3-triethoxysilylpropyl) disulfide, bis(3-triethoxysilylpropyl)tetrasulfide, and the like; mercapto-based silane coupling agents such as 3-mercaptopropyltrimethoxysilane, 3-mercaptopropyltriethoxysilane, 2-mercaptoethyltrimethoxysilane, 2-mercaptoethyltriethoxysilane, and the like; vinyl-based silane coupling agents such as vinyltriethoxysilane, vinyltrimethoxysilane, and the like; amino-based silane coupling agents such as 3-aminopropyltriethoxysilane, 3-aminopropyltrimethoxysilane, 3-(2-aminoethyl)aminopropyltriethoxysilane, and the like; glycidoxy-based silane coupling agents such as γ-glycidoxypropyltriethoxysilane, γ-glycidoxypropyltrimethoxysilane, and the like; nitro-based silane coupling agents such as 3-nitropropyltrimethoxysilane, 3-nitropropyltriethoxysilane, and the like; chloro-based silane coupling agents such as 3-chloropropyltrimethoxysilane, 3-chloropropyltriethoxy, and the like. Among them, sulfide-based silane coupling agents and/or mercapto-based silane coupling agents are preferably compounded. As the silane coupling agent, for example, those commercially available from Evonik Industries AG, Momentive Performance Materials, etc. can be used. The silane coupling agent may be used alone, or two or more thereof may be used in combination.

(Carbon black)

Examples of carbon black include, but not particularly limited to, N134, N110, N220, N234, N219, N339, N330, N326, N351, N550, N762, and the like. A raw material of carbon black may be a biomass material such as lignin, a vegetable oil, and the like, or may be a pyrolysis oil obtained by pyrolyzing a waste tire. Moreover, a method of producing carbon black may be one by combustion such as a furnace method and the like, one by hydrothermal carbonization (HTC), or one by pyrolysis of methane such as a thermal black method and the like. As commercially available products, products from, Asahi Carbon Co., Ltd., Cabot Japan K.K., Tokai Carbon Co., Ltd., Mitsubishi Chemical Corporation, Lion Corporation, NIPPON STEEL Chemical & Material Co., Ltd., Columbia Chemical Corporation, etc. can be used. Carbon black may be used alone, or two or more thereof may be used in combination.

Moreover, besides the above-described carbon black, from the viewpoint of life cycle assessment, carbon black made from a biomass material such as lignin and the like or a recovered carbon black obtained by pyrolyzing and refining a product including carbon black such as a tire and the like may be used as carbon black.

In the present specification, a "recovered carbon black" refers to a carbon black obtained by pulverizing a product such as a used tire comprising carbon black and the like and baking the pulverized product, in which, when the product is subjected to oxidative combustion by heating in the air, using a thermal weight measurement method according to JIS K 6226-2:2003, a ratio of a mass of ash (ash content), which is a component that does not combust, is 13% by mass or more. That is, a ratio of a mass (carbon amount) of a weight loss content due to the oxidative combustion of the recovered carbon black is 87% by mass or less. The recovered carbon black may be expressed by rCB.

The recovered carbon black can be obtained from a pyrolysis process of a used pneumatic tire. For example, EP 3427975 A describes, with reference to "Rubber Chemistry and Technology", Vol. 85, No. 3, Pages 408 to 449 (2012), in particular, Pages 438, 440, and 442, that the recovered carbon black can be obtained by pyrolysis at 550 to 800°C excluding oxygen or vacuum pyrolysis at a relatively low temperature, of an organic material ([0027]). Such carbon black obtained from the pyrolysis process usually lacks a functional group on its surface, as mentioned in [0004] of JP 6856781 B (A comparison of surface morphology and chemistry of pyrolytic carbon blacks with commercial carbon blacks, Powder Technology 160 (2005) 190-193).

The recovered carbon black may lack a functional group on its surface or may be treated so that its surface comprises a functional group. The treatment performed so that the surface of the recovered carbon black comprises a functional group can be implemented by a conventional method. For example, in EP3173251 A, carbon black comprising a hydroxyl and/or carboxyl group on its surface is obtained by treating carbon black obtained from a pyrolysis process with potassium permanganate under an acidic condition. Moreover, in JP 6856781 B, carbon black whose surface is activated is obtained by treating carbon black obtained from a pyrolysis process with an amino acid compound comprising at least one thiol group or disulfide group. The recovered carbon black relating to the present embodiment also comprises carbon black whose surface has been treated so as to comprise a functional group.

As the recovered carbon black, those commercially available from Strebl Green Carbon Pte Ltd., LD Carbon, etc. can be used.

A nitrogen adsorption specific surface area ($N_2SA$) of carbon black is preferably greater than 80 $m^2/g$, more preferably greater than 90 $m^2/g$, further preferably greater than 100 $m^2/g$, particularly preferably greater than 105 $m^2/g$, from the viewpoint of reinforcing property. Moreover, it is preferably less than 200 $m^2/g$, more preferably less than 180 $m^2/g$, further preferably less than 150 $m^2/g$, from the viewpoints of heat generation and processability. The $N_2SA$ of carbon black is measured by the above-described measuring method.

An average primary particle size of carbon black is preferably greater than 12 nm, more preferably greater than 15 nm, further preferably greater than 18 nm. Moreover, the average primary particle size is preferably less than 50 nm, more preferably less than 30 nm, further preferably less than 25 nm. Besides, the average primary particle size of carbon black is measured by the above-described measuring method.

A content of carbon black based on 100 parts by mass of the rubber component when compounded in the rubber composition is preferably greater than 30 parts by mass, more preferably greater than 40 parts by mass, further preferably greater than 50 parts by mass, particularly preferably greater than 60 parts by mass. Moreover, the content of carbon black based on 100 parts by mass of the rubber component is preferably less than 110 parts by mass, more preferably less than 100 parts by mass, further preferably less than 80 parts by mass, from the viewpoint of abrasion resistance.

(Other fillers)

The filler may include other fillers besides silica and carbon black. Other fillers are not particularly limited, and those conventionally and commonly used in the tire industry can be compounded, such as, for example, aluminum hydroxide, calcium carbonate, alumina, clay, talc, and the like.

<Plasticizing agent>

The plasticizing agent is a material that imparts plasticity to the rubber component, and has a concept that includes both a plasticizing agent in a liquid state at 25°C and a plasticizing agent that is solid at 25°C. Examples of the plasticizing agent include, resin, oil, a liquid rubber, an ester-based plasticizing agent, and the like. These plasticizing agents may be ones derived from mineral resources such as petroleum, a natural gas, and the like, or naphtha-derived ones recycled from a rubber product or a non-rubber product. Moreover, low-molecular-weight hydrocarbon components obtained by pyrolyzing used tires or products containing these agents and performing extraction from the pyrolysate may be used as plasticizing agents. The plasticizing agent may be used alone, or two or more thereof may be used in combination.

It is more preferable that the rubber composition relating to the present embodiment comprises, as a plasticizing agent, a copolymer resin comprising cyclopentadiene as a monomer component, and comprises a resin component comprising the resin and oil.

<<Copolymer resin comprising cyclopentadiene as monomer component>>

The copolymer resin comprising cyclopentadiene as a monomer component is not particularly limited as long as it is resin comprising cyclopentadiene as a monomer component, and may further comprise other monomer components described below. Moreover, it may be one obtained by hydrogenating or modifying them.

Other monomer components other than cyclopentadiene are, but not particularly limited to, preferably monomer components commonly used in petroleum resins, more preferably a C9 fraction described below, etc., further preferably styrene and/or indene. "Styrene" constituting a monomer component may be a compound having a styrene structure other than styrene, examples of which include, for example, styrene, α-methylstyrene, vinyltoluene, chlorostyrene, and the like.

The copolymer resin comprising cyclopentadiene as a monomer component preferably comprises a copolymer resin comprising styrene and cyclopentadiene as monomer components. It may be one obtained by hydrogenating or modifying the copolymer resin.

As the copolymer resin comprising cyclopentadiene as a monomer component, for example, those commercially available from ExxonMobil Corporation, ENEOS Corporation, Zeon Corporation, Maruzen Petrochemical Co., Ltd., etc. can be used. The resin may be used alone, or two or more thereof may be used in combination.

A content of styrene when further compounded in 100% by mass of the copolymer resin comprising cyclopentadiene as a monomer component is preferably 0.5% by mass or more, more preferably 0.8% by mass or more, further preferably 1.0% by mass or more, further preferably 2.0% by mass or more, further preferably 3.0% by mass or more, further preferably 4.0% by mass or more, further preferably 5.0% by mass or more, from the viewpoint of the effects of the present invention. Moreover, an upper limit value of the content of styrene is not particularly limited, but can be, for example, less than 50% by mass, less than 40% by mass, less than 30% by mass, less than 10% by mass, or the like.

A softening point of a copolymer resin comprising cyclopentadiene as a monomer component is preferably higher than 70°C, more preferably higher than 80°C, further preferably higher than 90°C, particularly preferably higher than 100°C, from the viewpoint of the effects of the present invention. Moreover, it is preferably lower than 150°C, more preferably lower than 140°C, further preferably lower than 130°C, from the viewpoints of processability and improvement of dispersibility of a rubber component with a filler. The softening point of resin is measured by the above-described measuring method.

A total content of a copolymer resin comprising cyclopentadiene as a monomer component based on 100 parts by mass of the rubber component is preferably 5 parts by mass or more, more preferably 8 parts by mass or more, further preferably 9 parts by mass or more. Moreover, the content is preferably less than 50 parts by mass, more preferably less than 40 parts by mass, further preferably less than 30 parts by mass, particularly preferably less than 20 parts by mass, from the viewpoint of processability.

In the rubber composition relating to the present embodiment, a total styrene amount in the rubber composition based on 100% by mass of the rubber component is preferably 1% by mass or more, more preferably 3% by mass or more, further preferably 5% by mass or more, further preferably 7% by mass or more, further preferably 10% by mass or more, further preferably 13% by mass or more, further preferably 15% by mass or more, further preferably 17% by mass or more, from the viewpoint of the effects of the present invention. Moreover, it is preferably 20% by mass or less, more preferably 17% by mass or less, further preferably 15% by mass or less, further preferably 13% by mass or less, further preferably 10% by mass or less, further preferably 7% by mass or less, further preferably 5% by mass or less, further preferably 3% by mass or less, further preferably 2% by mass or less, from the viewpoint of fuel efficiency.

Besides, the total styrene amount in the rubber composition can be appropriately adjusted depending on types and compounding amounts of rubber components. For example, the total styrene amount S can be increased by increasing a compounding amount of a styrene-butadiene rubber, compounding a styrene-butadiene rubber having a high styrene content, compounding a resin component comprising styrene as a monomer component, or the like. Conversely, the total styrene content S can be decreased by decreasing a compounding amount of a styrene-butadiene rubber or the like.

(Other resin components)

The rubber composition relating to the present embodiment may comprise a resin component other than a copolymer resin comprising cyclopentadiene as a monomer component for use in combination. The resin component that can be used in the present embodiment is not particularly limited, and any resin commonly used in the tire industry can be used, examples of which include, for example, a C9-based resin, a C5-based resin, a C5/C9-based resin, an aromatic vinyl-based resin, a coumarone-based resin, an indene-based resin, a terpene-based resin, a rosin-based resin, a phenol-based resin, and the like. These resin components may be used alone, or two or more thereof may be used in combination. Each resin component may also be used alone, respectively, or two or more thereof may be used in combination.

<<C9-based resin>>

A "C9-based resin" refers to a resin obtained by polymerizing C9 fractions, and may be a polymer obtained by polymerizing a C9 fraction alone or a copolymer obtained by copolymerizing a C9 fraction with other components. For example, resin obtained by copolymerizing dicyclopentadiene (DCPD) with a C9 fraction is referred to as a DCPD/C9 resin. Moreover, the C9-based resin may be one obtained by hydrogenating or modifying them. Examples of the C9 fraction include, for example, a petroleum fraction having 8 to 10 carbon atoms such as vinyltoluene, alkylstyrene, coumarone, indene, methylindene, dicyclopentadiene, and the like. As the C9-based resin, for example, those commercially available from BASF, Zeon Corporation, ENEOS Corporation, etc. can be used.

<<C5-based resin>>

A "C5-based resin" refers to resin obtained by polymerizing C5 fractions and may be one obtained by hydrogenating or modifying them. Examples of C5 fractions other than dicyclopentadiene include, for example, a petroleum fraction having 4 to 5 carbon atoms, such as cyclopentadiene, isoprene, piperylene, 2-methyl-1-butene, 2-methyl-2-butene, 1-pentene, and the like. As the C5-based resin, for example, those commercially available from STRUKTOL, Zeon Corporation, ENEOS Corporation, etc. can be used.

<<C5/C9-based resin>>

A "C5/C9-based resin" refers to a resin obtained by copolymerizing the C5 fraction and the C9 fraction and may be one obtained by hydrogenating or modifying them. As the C5/C9-based resin, for example, those commercially available from Tosoh Corporation, Zibo Luhua Hongjin New Material Group Co., Ltd, etc. can be appropriately used.

<<Aromatic vinyl-based resin>>

An "aromatic vinyl-based resin" refers to a resin comprising an aromatic vinyl compound such as styrene, $\alpha$-methylstyrene, vinyltoluene, p-chlorostyrene, and the like as a monomer component having the largest content, and may be one obtained by hydrogenating or modifying them. As the aromatic vinyl-based resin, a homopolymer of $\alpha$-methylstyrene or styrene or a copolymer of $\alpha$-methylstyrene and styrene is preferable, and a copolymer of $\alpha$-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used.

<<Coumarone-based resin>>

A "coumarone-based resin" refers to a resin comprising coumarone as a monomer component and may be one obtained by hydrogenating or modifying it. As the coumarone-based resin, for example, a coumarone resin that is a polymer comprising only coumarone as a monomer component, a coumarone-indene resin that is a copolymer comprising coumarone and indene as monomer components, a coumarone-indene-styrene resin that is a copolymer comprising coumarone, indene, and styrene as monomer components, and the like are preferable. As the coumarone-based resin, for example, those commercially available from Rutgers Chemicals, Nitto Chemical Co., Ltd., Mitsui Chemicals, Inc., etc. can be used.

<<Indene-based resin>>

An "indene-based resin" refers to a resin comprising indene as a monomer component and may be one obtained by hydrogenating or modifying it. As the indene-based resin, for example, a coumarone-indene resin that is a copolymer comprising coumarone and indene as monomer components, a coumarone-indene-styrene resin that is a copolymer comprising coumarone, indene, and styrene as monomer components, and the like are preferable. As the indene-based resin, for example, those commercially available from Rutgers Chemicals, Nitto Chemical Co., Ltd., Mitsui Chemicals, Inc., etc. can be used.

<<Terpene-based resin>>

A "terpene-based resin" refers to a resin comprising a terpene compound such as $\alpha$-pinene, $\beta$-pinene, limonene, dipentene, and the like as a monomer component, and may be one obtained by hydrogenating or modifying them. As the terpene-based resin, for example, a polyterpene resin that is a polymer comprising only one or more of the terpene compounds as monomer components, an aromatic-modified terpene resin that is a copolymer comprising the terpene compound and an aromatic compound as monomer components, a terpene phenolic resin that is a copolymer comprising the terpene compound and a phenol compound as monomer components, and the like are preferable. Examples of the aromatic compound used as a monomer component for the aromatic-modified terpene resin include, for example, styrene, $\alpha$-methylstyrene, vinyltoluene, divinyltoluene, and the like. Examples of the phenol compound used as a monomer component for the terpene phenolic resin include, for example, phenol, bisphenol A, cresol, xylenol, and the like. As the terpene-based resin, for example, those commercially available from Yasuhara Chemical Co., Ltd., Arakawa Chemical Industries, Ltd., Nippon Terpene Chemicals, Inc., etc. can be used.

<<Rosin-based resin>>

A "rosin-based resin" refers to a resin comprising a rosin acid compound such as abietic acid, neoabietic acid, palustric acid, isopimaric acid, and the like, and may be one obtained by hydrogenating or modifying them. Example of the rosin-based resin include, but not particularly limited to, for example, a natural resin rosin and a rosin-modified resin obtained by modifying the natural resin rosin by hydrogenation, disproportionation, dimerization, esterification, etc., and the like. As the rosin-based resin, for example, those commercially available from Harima Chemicals Group, Inc., Arakawa Chemical Industries, Ltd., IREC Co., Ltd., etc. can be used.

<<Phenol-based resin>>

A "phenol-based resin" refers to a resin comprising a phenolic compound such as phenol, cresol, and the like as a monomer component, and may be one obtained by hydrogenating or modifying them. Examples of the phenol-based resin include, but not particularly limited to, a phenol formaldehyde resin, an alkylphenol formaldehyde resin, an alkylphenol acetylene resin, an oil-modified phenol formaldehyde resin, a terpene phenolic resin, and the like. As the phenol-based resin, for example, those commercially available from Sumitomo Bakelite Co., Ltd., DIC Corporation, ASAHI YUKIZAI CORPORATION, etc. can be used.

<<Softening point>>

A softening point of resin is preferably higher than 80°C, more preferably higher than 90°C, further preferably higher than 100°C, from the viewpoint of wet grip performance. Moreover, it is preferably lower than 150°C, more preferably lower than 140°C, further preferably lower than 130°C, from the viewpoints of processability and improvement of dispersibility of a rubber component with a filler. The softening point of resin is measured by the above-described measuring method.

(Plasticizing agent other than resin component)

Oil, a liquid rubber, and an ester-based plasticizing agent that are plasticizing agents other than resin components will be described.

(Oil)

Examples of oil include, for example, a mineral oil, a vegetable oil, an animal oil, and the like. Moreover, from the viewpoint of life cycle assessment, those obtained by purifying a waste oil after being used in a rubber mixer or an engine, or a waste cooking oil used in a restaurant, may be used. Oil may be used alone, or two or more thereof may be used in combination.

In the present specification, a mineral oil refers to oil derived from mineral resources such as petroleum, a natural gas, and the like. Examples of the mineral oil include paraffinic oils (mineral oils), naphthenic oils, aromatic oils, and the like. Specific examples of the mineral oil include, for example, MES (Mild Extracted Solvate), DAE (Distillate Aromatic Extract), TDAE (Treated Distillate Aromatic Extract), TRAE (Treated Residual Aromatic Extract), RAE (Residual al Aromatic Extract), and the like. Moreover, as an environmental measure, an oil having a low content of a polycyclic aromatic compound (PCA) can also be used. Examples of the oil having a low content of a PCA content include MES, TDAE, a heavy naphthenic oil, and the like.

In the present specification, examples of the vegetable oil include, for example, a linseed oil, a rapeseed oil, a safflower oil, a soybean oil, a corn oil, a cottonseed oil, a rice oil, a tall oil, a sesame oil, a perilla oil, a castor oil, a tung oil, a pine oil, a pine tar oil, a sunflower oil, a coconut oil, a palm oil, a palm kernel oil, an olive oil, a camellia oil, a jojoba oil, a macadamia nut oil, a peanut oil, a grapeseed oil, a Japan wax, and the like. Furthermore, examples of the vegetable oil also include a refined oil obtained by refining the above-described oil (a salad oil, etc.), a transesterified oil obtained by transesterifying the above-described oil, a hydrogenated oil obtained by hydrogenating the above-described oil, a thermally polymerized oil obtained by thermally polymerizing the above-described oil, an oxidized polymerized oil obtained by oxidizing the above-described oil, a waste cooking oil obtained by recovering what was utilized as an edible oil, etc., and the like. Besides, the vegetable oil may be liquid or solid at 25°C.

The vegetable oil relating to the present embodiment preferably comprises acylglycerol, and more preferably comprises triacylglycerol. Besides, in the present specification, acylglycerol refers to a compound in which a hydroxy group of glycerin and a fatty acid are ester-bonded. Acylglycerol is not particularly limited, and may be 1-monoacylglycerol, 2-monoacylglycerol, 1,2-diacylglycerol, 1,3-diacylglycerol, or triacylglycerol. Furthermore, acylglycerol may be a monomer, a dimer, or a multimer that is a trimer or higher. Besides, acylglycerol that is a dimer or higher can be obtained by thermal polymerization, oxidative polymerization, or the like. In addition, acylglycerol may be liquid or solid at 25°C.

As a method of confirming whether the rubber composition comprises acylglycerol, the confirmation can be performed by, but not particularly limited to, $^1$H-NMR measurement. For example, a rubber composition comprising triacylglycerol is immersed in a heavy chloroform at 25°C for 24 hours and removed to measure $^1$H-NMR under a room temperature, and when a signal of tetramethylsilane (TMS) is set to 0.00 ppm, signals near 5.26 ppm, near 4.28 ppm, and near 4.15 ppm are observed, the signals being presumed to be derived from hydrogen atoms bonded to carbon atoms adjacent to oxygen atoms of an ester group. Besides, "near" in this paragraph shall be a range of $\pm 0.10$ ppm.

The above-described fatty acid is not particularly limited and may be an unsaturated fatty acid or a saturated fatty acid. Examples of the unsaturated fatty acid include a monounsaturated fatty acid such as oleic acid and the like, and a polyunsaturated fatty acid such as linoleic acid, linolenic acid, and the like. Moreover, examples of the saturated fatty acid include butyric acid, lauric acid, and the like.

Among them, as the fatty acid, a fatty acid having few double bonds, that is, a saturated fatty acid or a monounsaturated fatty acid is desired, and oleic acid is preferable. As a vegetable oil comprising such fatty acid, for example, a vegetable oil comprising a saturated fatty acid or a monounsaturated fatty acid may be used, or a vegetable oil modified by transesterification or the like may be used. Moreover, in order to produce a vegetable oil comprising such fatty acid, a plant may be improved by selective breeding, gene recombination, or the like.

As the vegetable oil, for example, those commercially available from Idemitsu Kosan Co., Ltd., Sankyo Yuka Kogyo K.K., ENEOS Corporation, Olisoy, H&R Group, Hokoku Corporation, Fuji Kosan Co., Ltd., The Nisshin OilliO Group, Ltd., etc. can be used.

Examples of the animal oil include a fish oil, a beef tallow, an oleyl alcohol that can be derived therefrom, and the like.

A content of oil when compounded based on 100 parts by mass of the rubber component is preferably 1 part by mass or more, more preferably 3 parts by mass or more, further preferably 5 parts by mass or more, from the viewpoint of processability. Moreover, the content of oil is preferably 50 parts by mass or less, more preferably 30 parts by mass or less, further preferably 10 parts by mass or less.

The above-described resin component and the above-described oil may be added during production of a rubber composition, or may be added in advance to raw materials. Examples of those added in advance to raw materials include a resin-extended rubber and an oil-extended rubber which are extended with rubber components. As extended resin and extending oil, natural resin and oil (such as a terpene resin, a vegetable oil, and the like) or recycled resin and oil are preferable.

(Liquid rubber)

A liquid rubber is not particularly limited as long as it is a polymer in a liquid state at 25°C, examples of which include, for example, a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like. The liquid rubber may be used alone, or two or more thereof may be used in combination.

(Ester-based plasticizing agent)

Examples of the ester-based plasticizing agent include, for example, dibutyl adipate (DBA), diisobutyl adipate (DIBA), dioctyl adipate (DOA), bis(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. The ester-based plasticizing agent may be used alone, or two or more thereof may be used in combination.

A total amount P based on 100 parts by mass of the rubber component in the rubber composition relating to the present embodiment is preferably 5 parts by mass or more, more preferably 8 parts by mass or more, further preferably 10 parts by mass or more, particularly preferably 12 parts by mass or more, from the viewpoint of the effects of the present invention. Moreover, P is preferably less than 60 parts by mass, more preferably less than 50 parts by mass, further preferably less than 40 parts by mass, particularly preferably less than 35 parts by mass, from the viewpoint of heat generation.

<Other compounding agents>

The rubber composition can appropriately comprise compounding agents conventionally and commonly used in the tire industry, for example, a vulcanized rubber particle, processing aid, wax, stearic acid, zinc oxide, an antioxidant, a vulcanizing agent, a vulcanization accelerator, and the like, in addition to the rubber components, the fillers, and the plasticizing agents.

(Vulcanized rubber particle)

A vulcanized rubber particle is a particle made of a vulcanized rubber, and specifically, a rubber powder and the like specified in JIS K 6316:2017 can be used. From the viewpoints of environmental considerations and costs, a recycled rubber powder produced from a pulverized product of a waste tire or the like is preferable. The vulcanized rubber particle may be used alone, or two or more thereof may be used in combination.

The vulcanized rubber particle is not particularly limited and may be a non-modified vulcanized rubber particle or a modified vulcanized rubber particle.

As commercially available products of vulcanized rubbers, for example, products from Lehigh Technologies, Muraoka Rubber Reclaiming Co., Ltd., etc. can be used.

(Processing aid)

Examples of processing aid include, for example, a fatty acid metal salt, a fatty acid amide, an amide ester, a silica surface active agent, a mixture of a fatty acid metal salt and an amide ester, a mixture of a fatty acid metal salt and a fatty acid amide, and the like. Processing aid may be used alone, or two or more thereof may be used in combination. As processing aid, for example, those commercially available from Schill+Seilacher GmbH, Performance Additives, etc. can be used.

A content of processing aid when compounded based on 100 parts by mass of the rubber component is preferably greater than 0.5 parts by mass, more preferably greater than 1 part by mass, further preferably greater than 1.5 parts by mass, from the viewpoint of exhibiting an effect of improving processability. Moreover, it is preferably less than 10 parts by mass, more preferably less than 8.0 parts by mass, further preferably less than 5.0 parts by mass, from the viewpoints of abrasion resistance and breaking strength.

(Wax)

Wax is not particularly limited, and any of those commonly used in the tire industry can be appropriately used, examples of which include, for example, a mineral-based wax, a plant-derived wax, and the like. The mineral-based wax refers to wax derived from mineral resources such as oil, a natural gas, and the like. The plant-derived wax refers to wax derived from natural resources such as a plant and the like. Among them, the mineral-based wax is preferable. Examples of the plant-derived wax include, for example, a rice wax, a carnauba wax, a candelilla wax, and the like. Examples of the mineral-based wax include, for example, a paraffin wax, a microcrystalline wax, specially selected waxes thereof, and the like. Among them, a paraffin wax is preferable. Besides, wax relating to the present embodiment shall not comprise stearic acid. As wax, for example, those commercially available from Ouchi Shinko Chemical Industry Co., Ltd., Nippon Seiro Co., Ltd., Paramelt B.V., etc. can be used. Wax may be used alone, or two or more thereof may be used in combination.

A content of wax when compounded based on 100 parts by mass of the rubber component is preferably greater than 0.5 parts by mass, more preferably greater than 1.0 parts by mass, further preferably greater than 1.5 parts by mass, from the viewpoint of weather resistance of a rubber. Moreover, it is preferably less than 10 parts by mass, more preferably less than 7.0 parts by mass, further preferably less than 5.0 parts by mass, from the viewpoint of preventing whitening of a tire due to bloom.

(Stearic acid)

A content of stearic acid when compounded based on 100 parts by mass of the rubber component is preferably greater than 0.5 parts by mass, more preferably greater than 1.0 parts by mass, further preferably greater than 1.5 parts by mass, from the viewpoint of processability. Moreover, it is preferably less than 10 parts by mass, more preferably less than 8.0 parts by mass, further preferably less than 5.0 parts by mass, from the viewpoint of vulcanization rate.

(Zinc oxide)

A content of zinc oxide when compounded based on 100 parts by mass of the rubber component is preferably greater than 0.5 parts by mass, more preferably greater than 1.0 parts by mass, further preferably greater than 1.5 parts by mass, from the viewpoint of processability. Moreover, it is preferably less than 10 parts by mass, more preferably less than 8.0 parts by mass, further preferably less than 5.0 parts by mass, from the viewpoint of abrasion resistance.

(Antioxidant)

Examples of the antioxidant include, but not particularly limited to, a naphthylamine-based antioxidant such as phenyl-$\alpha$-naphthylamine and the like; a diphenylamine-based antioxidant such as an octylated diphenylamine, 4,4'-bis($\alpha,\alpha$'-dimethylbenzyl)diphenylamine, and the like; p-phenylenediamine-based antioxidant such as N-isopropyl-N'-phenyl-p-phenylenediamine, N-(1,3-dimethylbutyl)-N'-phenyl-p-phenylenediamine (6PPD), N,N'-bis(1,4-dimethylpentyl)-p-phenylenediamine (77PD), N,N'-diphenyl-p-phenylenediamine (DPPD), N,N'-ditolyl-p-phenylenediamine (DTPD), N-isopropyl-N'-phenyl-p-phenylenediamine (IPPD), N,N'-di-2-naphthyl-p-phenylenediamine (DNPD), and the like; a quinoline-based antioxidant such as a polymer of 2,2,4-trimethyl-1,2-dihydroquinoline and the like; a monophenol-based antioxidant such as 2,6-di-t-butyl-4-methylphenol, a styrenated phenol, and the like; bis-, tris-, and polyphenol-based antioxidants such as tetrakis-[methylene-3-(3',5'-di-t-butyl-4'-hydroxyphenyl)propionate]methane and the like. Among them, p-phenylenediamine-based antioxidants and quinoline-based antioxidants are preferable, and N-(1,3-dimethylbutyl)-N'-phenyl-p-phenylenediamine and a polymer of 2,2,4-trimethyl-1,2-dihydroquinoline are more preferable. As commercially available products, for example, products manufactured by Seiko Chemical Co., Ltd., Sumitomo Chemical Co., Ltd., Ouchi Shinko Chemical Industry Co., Ltd., Flexsys, etc. can be used. The antioxidant may be used alone, or two or more thereof may be used in combination.

A content of an antioxidant when compounded based on 100 parts by mass of the rubber component is preferably greater than 0.5 parts by mass, more preferably greater than 0.8 parts by mass, further preferably greater than 1.0 parts by mass, particularly preferably greater than 1.5 parts by mass, from the viewpoint of ozone crack resistance of a rubber. Moreover, it is preferably less than 5.0 parts by mass, more preferably less than 4.0 parts by mass, further preferably less than 3.0 parts by mass, from the viewpoints of abrasion resistance and wet grip performance.

(Vulcanizing agent)

Sulfur is appropriately used as a vulcanizing agent. As sulfur, a powdery sulfur, an oil processing sulfur, a precipitated sulfur, a colloidal sulfur, an insoluble sulfur, a highly dispersible sulfur, and the like can be used. The vulcanizing agent may be used alone, or two or more thereof may be used in combination.

A content of sulfur when compounded based on 100 parts by mass of the rubber component is preferably greater than 0.5 parts by mass, more preferably greater than 0.8 parts by mass, further preferably greater than 1.0 parts by mass, particularly preferably greater than 1.4 parts by mass, from the viewpoint of securing a sufficient vulcanization reaction. Moreover, it is preferably less than 5.0 parts by mass, more preferably less than 3.0 parts by mass, further preferably less than 2.0 parts by mass, from the viewpoint of preventing deterioration. Besides, a content of a vulcanizing agent when an oil-containing sulfur is used as the vulcanizing agent shall be a total content of pure sulfur comprised in the oil-containing sulfur.

As a vulcanizing agent other than sulfur, a known organic cross-linking agent can also be used. The organic cross-linking agent is not particularly limited as long as it can form cross-linked chains other than a polysulfide bond, examples of which, include, for example, an alkylphenol-sulfur chloride condensate, sodium hexamethylene-1,6-bisthiosulfate dihydrate, 1,6-bis(N,N'-dibenzylthiocarbamoyldithio)hexane, dicumylperoxide, and the like. Among them, 1,6-bis(N,N'-dibenzylthiocarbamoyldithio)hexane is preferable. As these organic cross-linking agents, those commercially available from Taoka Chemical Co., Ltd., LANXESS, Flexsys, etc. can be used.

(Vulcanization accelerator)

Examples of a vulcanization accelerator include, but not particularly limited to, for example, a sulfenamide-based vulcanization accelerator, a thiazole-based vulcanization accelerator, a guanidine-based vulcanization accelerator, a thiuram-based vulcanization accelerator, a thiourea-based vulcanization accelerator, a dithiocarbamic acid-based vulcanization accelerator, an aldehyde-amine-based vulcanization accelerator, an aldehyde-ammonia-based vulcanization accelerator, an imidazoline-based vulcanization accelerator, a xanthate-based vulcanization accelerator, a caprolactam disulfide, and the like. Among them, one or more vulcanization accelerators selected from the group consisting of a sulfenamide-based vulcanization accelerator, a thiazole-based vulcanization accelerator, and a guanidine-based vulcanization accelerator are preferable, from the viewpoint that desired effects can be obtained more appropriately. The vulcanization accelerator may be used alone, or two or more thereof may be used in combination.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like.

Examples of the thiazole-based vulcanization accelerator include, for example, 2-mercaptobenzothiazole (MBT) or a salt thereof, di-2-benzothiazolyl disulfide (MBTS), 2-(2,4-dinitrophenyl)mercaptobenzothiazole, 2-(2,6-diethyl-4-morpholinothio)benzothiazole, and the like.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like.

Examples of the thiuram-based vulcanization accelerator include, for example, tetrakis(2-ethylhexyl)thiuram disulfide (TOT-N), tetramethylthiuram disulfide (TMTD), tetraethylthiuram disulfide, tetramethylthium monosulfide (TMTM), dipentamethylene thiuram disulfide, dipentamethylene thiuram tetrasulfide, and the like.

Examples of the thiourea-based vulcanization accelerator include, for example, thiourea compounds such as thiocarbamide, diethylthiourea, dibutylthiourea, trimethylthiourea, diorthotolylthiourea, and the like, N,N'-diphenylthiourea, trimethylthiourea, N,N'-diethylthiourea, and the like.

Examples of the dithiocarbamate-based vulcanization accelerator include, for example, piperidinium pentamethylene dithiocarbamate (PPDC), zinc dimethyldithiocarbamate (ZnMDC), zinc diethyldithiocarbamate (ZnEDC), zinc dibutyldithiocarbamate (ZnBDC), zinc dibenzyldithiocarbamate (ZDBzC), zinc N-ethyl-N-phenyldithiocarbamate (ZnEPDC), zinc N-pentamethylene dithiocarbamate (ZnPDC), sodium dibutyldithiocarbamate (NaBDC), copper dimethyldithiocarbamate (CuMDC), iron dimethyldithiocarbamate (FeMDC), tellurium diethyldithiocarbamate (TeEDC), and the like.

A content of a vulcanization accelerator when compounded based on 100 parts by mass of the rubber component is preferably greater than 0.5 parts by mass, more preferably greater than 0.8 parts by mass, further preferably greater than 1.0 parts by mass. Moreover, the content of the vulcanization accelerator based on 100 parts by mass of the rubber component is preferably less than 4.0 parts by mass, more preferably less than 3.0 parts by mass, further preferably less than 2.0 parts by mass.

In the present specification, various materials comprising carbon atoms (for example, a rubber, oil, resin, a vulcanization accelerator, an antioxidant, a surfactant, etc.) may be derived from carbon dioxide in the atmosphere. As a method of obtaining the various materials from carbon dioxide, carbon dioxide may be directly converted, or methane obtained through a methanation step for synthesizing methane from carbon dioxide may be converted.

[Production]

The rubber composition can be produced by a known method. For example, it can be produced by kneading each of the above-described components using a rubber kneading apparatus such as an open roll, a closed type kneader (Bunbury mixer, kneader, etc.), and the like.

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired. In the case where the base kneading step is divided, the method may be (1) a method of kneading some of compounding agents and additives in advance into a masterbatch, and then adding the remaining compounding agents and additives to the obtained masterbatch and kneading them, (2) a method of kneading all of the compounding agents and additives in the base kneading step at once, and then remilling the kneaded product one or more times, or the like. In the above-described method (1), the number of masterbatches is not limited and may be two or more. Moreover, when the number of masterbatches is two or more, all of the compounding agents and additives used in the base kneading step may be allocated to any of the masterbatches.

A kneading condition is not particularly limited. Examples of kneading include, for example, in the base kneading step, a method of kneading at a discharge temperature of 150 to 170°C for 3 to 10 minutes, and in the final kneading step, a method of kneading at 70 to 110°C for 1 to 5 minutes.

The tire comprising a tread part composed of the rubber composition can be produced by a usual method. That is, the tire can be produced by extruding an unvulcanized rubber composition prepared by compounding each of the above-described components for a rubber component as necessary into a shape of a tread part, attaching the unvulcanized tread part thus obtained together with other tire members on a tire forming machine and molding them by a normal method to form an unvulcanized tire, followed by heating and pressurizing the unvulcanized tire thus obtained in a vulcanizing machine. A vulcanization condition is not particularly limited. Examples of vulcanization include, for example, a method of vulcanizing at 150 to 200°C for 10 to 30 minutes.

[Applications]

In the present specification, the tire is preferably a pneumatic tire from the viewpoint of the effects of the present invention. Moreover, it can be used as a tire for a small truck, a tire for a passenger car, a tire for a large passenger car, a tire for a large SUV, a racing tire, a motorcycle tire, a heavy-duty tire, or a run flat tire.

EXAMPLES

Examples considered to be preferable in implementation (Examples) are shown below, though the scope of the present invention is not limited to Examples. Results calculated based on the following evaluation methods considering a rubber composition and a tire obtained according to each Table using various chemicals shown below are shown in Tables.

<Various chemicals>

Chemicals used in Examples and Comparative examples are collectively described below.

IR-based rubber: TSR20 (natural rubber)

SBR1: SBR produced in Production example 1 mentioned below (styrene content: 30% by mass, vinyl content: 22 mol%, Tg: -45°C, Mw: 900,000)

SBR2: SBR produced in Production example 2 mentioned below (styrene content: 10% by mass, vinyl content: 41 mol%, Tg: -63°C, Mw: 200,000)

BR: Ubepol BR (Registered Trademark) 150B manufactured by UBE Corporation (unmodified BR, cis content: 97 mol%, Mw: 440,000)

Carbon black: Show Black N220 manufactured by Cabot Japan K.K. ($N_2SA$: 110 $m^2$/g, average primary particle size: 22 nm)

Silica: Ultrasil VN3 manufactured by Evonik Industries AG ($N_2SA$: 175 $m^2$/g, average primary particle size: 18 nm)

Silane coupling agent: Si266 manufactured by Evonik Industries AG (bis(3-triethoxysilylpropyl)disulfide)

Oil: VivaTec 500 manufactured by H&R Group (TDAE oil)

Resin: Oppera PR383 manufactured by Exxon Mobil Corporation (hydrogenated DCPD-C9 resin, comprising styrene and cyclopentadiene as monomer components, Mw: 770, softening point: 103°C, content of styrene part: 1.78% by mass)

Zinc oxide: Zinc oxide No. 1 manufactured by Mitsui Mining & Smelting Co., Ltd.

Antioxidant: Antigen 6C manufactured by Sumitomo Chemical Co., Ltd. (N-(1,3-dimethylbutyl)-N'-phenyl-p-phenylenediamine)

Stearic acid: Bead stearic acid "CAMELLIA" manufactured by NOF CORPORATION

Wax: OZOACE wax manufactured by Nippon Seiro Co., Ltd (paraffin wax)

Sulfur: Powdered sulfur manufactured by Karuizawa Sulfur Co, Ltd.

Vulcanization accelerator: Nocceler CZ manufactured by Ouchi Shinko Chemical Industry Co., Ltd. (N-cyclohexyl-2-benzothiazolylsulfenamide (CBS))

Production example 1: Production of SBR1

Cyclohexane, tetrahydrofuran, styrene, and 1,3-butadiene are charged into an autoclave reactor subjected to nitrogen purge. A ratio of styrene and 1,3-butadiene is adjusted so that a styrene content becomes 30% by mass. After adjusting the temperature of the contents in the reactor to 20°C, n-butyllithium is added to initiate polymerization. The polymerization is performed under an adiabatic condition, and the temperature reaches 80°C of the maximum temperature. After confirming production of a polymer having a Mw of 900,000 by GPC, a polymerization solution is poured into 4 L of ethanol to collect a precipitate. After blow-drying the obtained precipitate, it is dried under reduced pressure at 80°C/10 Pa or lower until a drying loss becomes 0.1% to obtain SBR1.

Production example 2: Production of SBR2

Cyclohexane, tetrahydrofuran, styrene, and 1,3-butadiene are charged into an autoclave reactor subjected to nitrogen purge. A ratio of styrene and 1,3-butadiene is adjusted so that a styrene content becomes 10% by mass. After adjusting the temperature of the contents in the reactor to 20°C, n-butyllithium is added to initiate polymerization. The polymerization is performed under an adiabatic condition, and the temperature reaches 80°C of the maximum temperature. After confirming production of a polymer having a Mw of 200,000 by GPC, a polymerization solution is poured into 4 L of ethanol to collect a precipitate. After blow-drying the obtained precipitate, it is dried under reduced pressure at 80°C/10 Pa or lower until a drying loss becomes 0.1% to obtain SBR2.

(Examples and Comparative examples)

According to the compounding formulations shown in Table 1 or 2, using a 1.7 L closed Banbury mixer, all chemicals other than sulfur and vulcanization accelerators are kneaded at a discharge temperature of 160°C for 4 minutes to obtain a kneaded product. Next, using an open roll, sulfur and vulcanization accelerators are added to the obtained kneaded product, and the mixture is kneaded for 4 minutes until a temperature reaches 105°C to obtain an unvulcanized rubber composition. The obtained unvulcanized rubber composition is used to be molded into a shape of a tread part, which is then attached together with other tire members, preparing an unvulcanized tire, and the unvulcanized tire is vulcanized at 170°C to obtain each test tire (size: 165/80R14, internal pressure: 450 kPa), according to the tire structure shown in Table 1 or 2.

<Steering stability during turning>

The test tire is mounted on all wheels of a test vehicle, and actual vehicle running is performed on a test course with a dry asphalt road surface. The vehicle is made to run at an average speed of 100 km/h, and test drivers perform a sensory evaluation on stability during cornering. The evaluation is performed using an integer value of 1 to 5 points to calculate a total score by 10 test drivers based on evaluation criteria that the higher the score is, the more excellent the steering stability during turning is. For evaluation of steering stability during turning, two control tires are used depending on compounding of a rubber composition constituting a tread part. The control tires shall be Comparative example 8 in Table 1 and Comparative example 11 in Table 2. A total score of each of the control tires is converted into a reference value (100), and the evaluation result for each test tire is indicated as an index to be rounded off in proportion to the total score. The results show that the larger the numerical value is, the higher the steering stability during turning is.

<Fuel efficiency>

Using a rolling resistance tester, rolling resistance when each test tire is made to run is measured, and an inverse value thereof is indicated as an index with Comparative example 8 in Table 1 and Comparative example 11 in Table 2 being as 100. The results show that the larger the numerical value is, the smaller the rolling resistance is, and the more excellent the fuel efficiency is.

A sum of the index for steering stability during cornering and the fuel efficiency index is defined as an overall performance index.

Table 1

| | Example | | | | | |
|---|---|---|---|---|---|---|
| | 1 | 2 | 3 | 4 | 5 | 6 |
| Compounding amount (parts by mass) | | | | | | |
| IR-based rubber | 60 | 60 | - | - | - | |
| SBR1 | - | - | 60 | 30 | 10 | - |
| SBR2 | - | - | - | 30 | 50 | 60 |
| BR | 40 | 40 | 40 | 40 | 40 | 40 |
| Carbon black | 70 | 70 | 70 | 70 | 70 | 70 |
| Oil | 5.0 | 5.0 | 5.0 | 5.0 | 5.0 | 5.0 |
| Resin | 10 | 10 | 10 | 10 | 10 | 10 |
| Zinc oxide | 3.0 | 3.0 | 3.0 | 3.0 | 3.0 | 3.0 |
| Antioxidant | 2.0 | 2.0 | 2.0 | 2.0 | 2.0 | 2.0 |
| Stearic acid | 2.0 | 2.0 | 2.0 | 2.0 | 2.0 | 2.0 |
| Wax | 2.0 | 2.0 | 2.0 | 2.0 | 2.0 | 2.0 |
| Sulfur | 1.5 | 1.5 | 1.5 | 1.5 | 1.5 | 1.5 |
| Vulcanization accelerator | 1.7 | 1.7 | 1.7 | 1.7 | 1.7 | 1.7 |
| Land ratio L of a pair of shoulder parts (%) | 90 | 100 | 100 | 100 | 100 | 100 |
| Total amount P of plasticizing agent components | 15.0 | 15.0 | 15.0 | 15.0 | 15.0 | 15.0 |
| L×P | 1350 | 1500 | 1500 | 1500 | 1500 | 1500 |
| Thickness T of tread part (mm) | 18.0 | 18.0 | 18.0 | 18.0 | 18.0 | 18.0 |
| T/Y | - | - | - | - | - | - |
| T/L | 0.20 | 0.18 | 0.18 | 0.18 | 0.18 | 0.18 |
| L×Y | 0 | 0 | 0 | 0 | 0 | 0 |
| Evaluation | | | | | | |
| Steering stability during turning | 106 | 110 | 110 | 113 | 116 | 116 |
| Fuel efficiency | 95 | 95 | 96 | 96 | 97 | 98 |
| Overall performance | 201 | 205 | 206 | 209 | 213 | 214 |

| | Comparative example | | | | | | | |
|---|---|---|---|---|---|---|---|---|
| | 1 | 2 | 3 | 4 | 5 | 6 | 7 | 8 |
| Compounding amount (parts by mass) | | | | | | | | |
| IR-based rubber | 60 | 60 | 60 | 60 | - | - | - | - |
| SBR1 | - | - | - | - | 60 | 30 | 10 | - |
| SBR2 | - | - | - | - | - | 30 | 50 | 60 |
| BR | 40 | 40 | 40 | 40 | 40 | 40 | 40 | 40 |
| Carbon black | 70 | 70 | 70 | 70 | 70 | 70 | 70 | 70 |
| Oil | 10.0 | 10.0 | 5.0 | 15.0 | 15.0 | 15.0 | 15.0 | 15.0 |
| Resin | - | - | 5 | - | - | - | - | - |
| Zinc oxide | 3.0 | 3.0 | 3.0 | 3.0 | 3.0 | 3.0 | 3.0 | 3.0 |
| Antioxidant | 2.0 | 2.0 | 2.0 | 2.0 | 2.0 | 2.0 | 2.0 | 2.0 |
| Stearic acid | 2.0 | 2.0 | 2.0 | 2.0 | 2.0 | 2.0 | 2.0 | 2.0 |
| Wax | 2.0 | 2.0 | 2.0 | 2.0 | 2.0 | 2.0 | 2.0 | 2.0 |
| Sulfur | 1.5 | 1.5 | 1.5 | 1.5 | 1.5 | 1.5 | 1.5 | 1.5 |
| Vulcanization accelerator | 1.7 | 1.7 | 1.7 | 1.7 | 1.7 | 1.7 | 1.7 | 1.7 |

(continued)

| | Comparative example | | | | | | | |
|---|---|---|---|---|---|---|---|---|
| | 1 | 2 | 3 | 4 | 5 | 6 | 7 | 8 |
| Compounding amount (parts by mass) | | | | | | | | |
| Land ratio L of a pair of shoulder parts (%) | 75 | 90 | 90 | 90 | 90 | 90 | 90 | 90 |
| Total amount P of plasticizing agent components | 10.0 | 10.0 | 10.0 | 15.0 | 15.0 | 15.0 | 15.0 | 15.0 |
| L×P | 750 | 900 | 900 | 1350 | 1350 | 1350 | 1350 | 1350 |
| Thickness T of tread part (mm) | 18.0 | 18.0 | 18.0 | 18.0 | 18.0 | 18.0 | 18.0 | 18.0 |
| T/Y | - | - | - | - | - | - | - | - |
| T/L | 0.24 | 0.20 | 0.20 | 0.20 | 0.20 | 0.20 | 0.20 | 0.20 |
| L×Y | 0 | 0 | 0 | 0 | 0 | 0 | 0 | 0 |
| Evaluation | | | | | | | | |
| Steering stability during turning | 87 | 90 | 94 | 94 | 97 | 97 | 100 | 100 |
| Fuel efficiency | 98 | 98 | 96 | 95 | 97 | 98 | 99 | 100 |
| Overall performance | 185 | 188 | 190 | 189 | 194 | 195 | 199 | 200 |

Table 2

| | Example | | | Comparative example | | |
|---|---|---|---|---|---|---|
| | 7 | 8 | 9 | 9 | 10 | 11 |
| Compounding amount (parts by mass) | | | | | | |
| IR-based rubber | - | - | - | - | - | - |
| SBR1 | - | - | - | - | - | - |
| SBR2 | 60 | 60 | 60 | 60 | 60 | 60 |
| BR | 40 | 40 | 40 | 40 | 40 | 40 |
| Carbon black | 5 | 5 | 5 | 5 | 5 | 5 |
| Silica | 65 | 65 | 65 | 65 | 65 | 65 |
| Coupling agent | 5.2 | 5.2 | 5.2 | 5.2 | 5.2 | 5.2 |
| Oil | 5.0 | 5.0 | 5.0 | 15.0 | 15.0 | 15.0 |
| Resin | 10 | 10 | 10 | | | |
| Zinc oxide | 3.0 | 3.0 | 3.0 | 3.0 | 3.0 | 3.0 |
| Antioxidant | 2.0 | 2.0 | 2.0 | 2.0 | 2.0 | 2.0 |
| Stearic acid | 2.0 | 2.0 | 2.0 | 2.0 | 2.0 | 2.0 |
| Wax | 2.0 | 2.0 | 2.0 | 2.0 | 2.0 | 2.0 |
| Sulfur | 1.5 | 1.5 | 1.5 | 1.5 | 1.5 | 1.5 |
| Vulcanization accelerator | 1.7 | 1.7 | 1.7 | 1.7 | 1.7 | 1.7 |
| Land ratio L of a pair of shoulder parts (%) | 100 | 100 | 100 | 90 | 90 | 90 |
| Total amount P of plasticizing agent components | 15.0 | 15.0 | 15.0 | 15.0 | 15.0 | 15.0 |
| L×P | 1500 | 1500 | 1500 | 1350 | 1350 | 1350 |
| Thickness T of tread part (mm) | 18.0 | 18.0 | 18.0 | 18.0 | 18.0 | 18.0 |
| T/Y | 0.28 | 0.23 | 0.14 | 0.28 | 0.23 | 0.14 |
| T/L | 0.18 | 0.15 | 0.09 | 0.20 | 0.17 | 0.10 |
| L×Y | 6500 | 6500 | 6500 | 5850 | 5850 | 5850 |
| Evaluation | | | | | | |
| Steering stability during turning | 112 | 115 | 118 | 94 | 97 | 100 |

(continued)

|  | Example | | | Comparative example | | |
|---|---|---|---|---|---|---|
|  | 7 | 8 | 9 | 9 | 10 | 11 |
| Compounding amount (parts by mass) | | | | | | |
| Fuel efficiency | 94 | 97 | 98 | 96 | 98 | 100 |
| Overall performance | 206 | 212 | 216 | 190 | 195 | 200 |

REFERENCE SIGNS LIST

1. Ground-contacting surface of tread part
2. Circumferential groove
W. Tire width direction
C. Tire circumferential direction
CL. Tire equator
Te. Tread end
TW. Tire ground-contacting width
Sh. Shoulder part

**Claims**

1. A tire comprising a tread part,

    wherein a standardized internal pressure of the tire is 350 kPa or more and 600 kPa or less,
    wherein the tread part is composed of a rubber composition comprising a rubber component, a filler, and a plasticizing agent,
    wherein the plasticizing agent comprises a copolymer resin comprising cyclopentadiene as a monomer component, and
    wherein L is 90 or more, preferably 92 or more, more preferably 95 or more, further preferably 98 or more, and $L \times P$ is greater than 1000, where a pair of shoulder parts represent a region of 10% from a tread end of a ground-contacting surface of the tread part, L represents a land ratio, in %, of the pair of shoulder parts, and P represents a total amount, in parts by mass, of the plasticizing agents based on 100 parts by mass of the rubber component in the rubber composition.

2. The tire of claim 1, wherein the rubber component comprises a styrene-butadiene rubber, and preferably comprises a styrene-butadiene rubber and a butadiene rubber.

3. The tire of claim 2, wherein a styrene content of the styrene-butadiene rubber is 25% by mass or less.

4. The tire of claim 2, wherein a styrene content of the styrene-butadiene rubber is 15% by mass or less.

5. The tire of claim 2, wherein a styrene content of the styrene-butadiene rubber is 10% by mass or less.

6. The tire of any one of claims 1 to 5, wherein the filler comprises silica.

7. The tire of any one of claims 1 to 6, wherein T/Y is less than 0.25, where T represents a thickness, in mm, of the tread part and Y represents a content, in parts by mass, of silica based on 100 parts by mass of the rubber component in the rubber composition.

8. The tire of claim 7, wherein T/Y is less than 0.25, preferably less than 0.20, more preferably less than 0.15.

9. The tire of any one of claims 1 to 8, wherein $L \times Y$ is greater than 6000, preferably greater than 6200, more preferably greater than 6400, where Y represents a content, in parts by mass, of silica based on 100 parts by mass of the rubber component in the rubber composition.

10. The tire of any one of claims 1 to 9, wherein T/L is less than 0.20, where T represents a thickness, in mm, of the tread part.

11. The tire of any one of claims 1 to 10, wherein L×P is greater than 1400.

**Fig.1**

**Fig.2**

Europäisches
Patentamt
European
Patent Office
Office européen
des brevets

# EUROPEAN SEARCH REPORT

**Application Number**

EP 25 20 1481

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 7 552130 B2 (SUMITOMO RUBBER IND) 18 September 2024 (2024-09-18) * examples 1, 3-11; table 1 * * paragraph [0133] * ----- | 1-11 | INV. B60C1/00 C08L7/00 C08L9/00 C08L9/06 |
| A | JP 2024 089619 A (SUMITOMO RUBBER IND) 3 July 2024 (2024-07-03) * examples 1-8; table 2 * * examples A-F; table 1 * * table 2 * ----- | 1-11 | |
| X | EP 3 254 872 B1 (SUMITOMO RUBBER IND [JP]) 28 November 2018 (2018-11-28) * examples 1-8; table 1 * * examples C, D, E; table 2 * * paragraph [0086] * * paragraph [0035] * ----- | 1-11 | |

**TECHNICAL FIELDS SEARCHED (IPC)**

B60C
C08L

The present search report has been drawn up for all claims

| Place of search | Date of completion of the search | Examiner |
|---|---|---|
| Munich | 20 February 2026 | Laïb, Samia |

EPO FORM 1503 03.82 (P04C01)

## ANNEX TO THE EUROPEAN SEARCH REPORT
## ON EUROPEAN PATENT APPLICATION NO.

EP 25 20 1481

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2026

| Patent document cited in search report | | Publication date | Patent family member(s) | | Publication date |
|---|---|---|---|---|---|
| JP 7552130 | B2 | 18-09-2024 | JP 7552130 | B2 | 18-09-2024 |
| | | | JP 2022030069 | A | 18-02-2022 |
| JP 2024089619 | A | 03-07-2024 | NONE | | |
| EP 3254872 | B1 | 28-11-2018 | CN 107471922 | A | 15-12-2017 |
| | | | EP 3254872 | A1 | 13-12-2017 |
| | | | JP 6784066 | B2 | 11-11-2020 |
| | | | JP 2017218042 | A | 14-12-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007186567 A
- JP 2009002594 A
- EP 3427975 A

- JP 6856781 B
- EP 3173251 A

**Non-patent literature cited in the description**

- *Akita Prefectural University Web Journal*, 2019, vol. 6, 216-222
- *Rubber Chemistry and Technology*, 2012, vol. 85 (3), 408-449

- A comparison of surface morphology and chemistry of pyrolytic carbon blacks with commercial carbon blacks. *Powder Technology*, 2005, vol. 160, 190-193